Europäisches Patentamt

European Patent Office

Office européen des brevets

(19)

(11) Veröffentlichungsnummer: **0 181 324**

**B1**

(12) **EUROPÄISCHE PATENTSCHRIFT**

(45) Veröffentlichungstag der Patentschrift:
12.08.87

(51) Int. Cl.⁴: **B 62 D 5/08**

(21) Anmeldenummer: **84901767.8**

(22) Anmeldetag: **04.05.84**

(86) Internationale Anmeldenummer:
**PCT/EP 84/00132**

(87) Internationale Veröffentlichungsnummer:
**WO 85/00564 (14.02.85 Gazette 85/04)**

(54) **DRUCKMITTELSTEUEREINRICHTUNG FÜR HILFSKRAFTLENKUNGEN.**

(30) Priorität: **23.07.83 PCT/EP83/00197**

(43) Veröffentlichungstag der Anmeldung:
**21.05.86 Patentblatt 86/21**

(45) Bekanntmachung des Hinweises auf die Patenterteilung:
**12.08.87 Patentblatt 87/33**

(84) Benannte Vertragsstaaten:
**DE FR GB SE**

(56) Entgegenhaltungen:
**DE-A-1 924 032**
**DE-A-2 242 346**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **LANG, Armin, Rheinstr. 10, D-7070 Schwäbisch Gmünd (DE)**
Erfinder: **KNÖDLER, Helmut, Elsternweg 6, D-7073 Lorch (DE)**

(74) Vertreter: **Raue, Reimund, Zahnradfabrik Friedrichshafen AG Löwentaler Strasse 100 Postfach 2520, D-7990 Friedrichshafen 1 (DE)**

EP 0 181 324 B1

## Beschreibung

Die Erfindung bezieht sich auf eine Druckmittelsteuereinrichtung für Hilfskraftlenkungen, insbesondere für Kraftfahrzeuge, nach dem Oberbegriff des Patentanspruches 1.

Eine derartige Druckmittelsteuereinrichtung ist bekannt aus der DE-A-1 924 032. In dieser Steuereinrichtung werden die beiden Ventilkolben durch Mitnehmerzapfen betätigt, die mittig angeordnet sind, d. h., die Achsen der Mitnehmerzapfen und die Lenkspindelachse liegen in einer gemeinsamen Ebene. Jeder Mitnehmerzapfen ist in einem Langloch der Ventilkolben spielfrei eingepaßt.

Die mittige Anordnung der Mitnehmerzapfen hat den Nachteil, daß wegen der endlichen Ausdehnung des Zapfens die Berührungslinie zwischen dem Zapfen und dem Ventilkolben um den Radius des Mitnehmerzapfens aus der Mitte, d. h. aus der gemeinsamen Ebene, versetzt ist. Bei einer Verschiebung des Ventilkolbens aus dessen Neutralstellung bewegt sich der Mitnehmerzapfen auf einer Kreisbahn um die Achse der Lenkspindel. Dabei führt der Mitnehmerzapfen gegenüber dem Ventilkolben eine in Richtung auf die Achse der Lenkspindel zielende Gleitbewegung aus, die etwa 20 % des Ventilhubes ausmacht. Durch diese Gleitbewegung entsteht Reibung zwischen dem Mitnehmerzapfen und dem Ventilkolben. Zur Vermeidung einer Ventilhysterese muß deshalb die Belastung zwischen Ventilkolben und Mitnehmerzapfen möglichst klein gehalten werden.

Der Erfindung liegt die Aufgabe zugrunde, in einer Druckmittelsteuereinrichtung der bekannten Art die Ventilkolbenanlenkung so zu gestalten, daß sie möglichst reibungs- und spielfrei arbeitet.

Diese Aufgabe wird durch die im kennzeichnenden Teil des Anspruches 1 angegebenen Merkmale gelöst. Vorteilhafte und zweckmäßige Ausgestaltungen sind in den Unteransprüchen angegeben.

Durch die "außermittige" Anordnung der Mitnehmerzapfen, d. h. durch die Verlegung der Berührungslinien zwischen den Mitnehmerzapfen und den Ventilkolben in eine mit der Drehachse der Lenkspindel gemeinsame Ebene, verringert sich die Gleitbewegung zwischen den Mitnehmerzapfen und den Ventilkolben etwa um den faktor 10 und wird dadurch so gering, daß die Übertragungskraft an den Berührungslinien durch Federkraft künstlich so erhöht werden kann, daß eine funktionelle formschlüssige Mitnahme in der Gegenrichtung entbehrlich wird.

Durch eine zusätzliche Vergrößerung des Abstandes der Berührungslinien zwischen den Mitnehmerzapfen und den Ventilkolben wird der Hebelarm für die Verstellung der Ventilkolben vergrößert. Dadurch werden die Betätigungskräfte und die Reibung zwischen den Mitnehmerzapfen und den Ventilkolben kleiner.

Außer der spielfreien und reibungsarmen Mitnahme hat die Erfindung den zusätzlichen Vorteil, daß die Fertigungstoleranzen der Mitnahmebohrungen beträchtlich erhöht werden können. Die den Berührungslinien zwischen den Mitnehmerzapfen und den Ventilkolben gegenüberliegenden flächen in der Mitnahmebohrung bzw. Mitnahmenut der Ventilkolben haben nur noch die Funktion von Sicherheitsflächen für den Fall, daß ein Ventilkolben sich, beispielsweise infolge von Verschmutzung, verklemmen sollte.

Die Verlegung der Mitnehmerzapfen an den Rand der Ventilkolben hat außerdem noch den Vorteil, daß die Mitnahmenuten in den Ventilkolben wesentlich einfacher und billiger hergestellt werden können als die Langlöcher.

Die in der Zeichnung dargestellten Einzelheiten sind Gegenstand der Erfindung.

Im folgenden wird die Erfindung anhand von zwei in der Zeichnung dargestellten Ausführungsbeispielen näher erläutert. Es zeigt:

Fig. 1 einen Querschnitt durch ein Ausführungsbeispiel der Druckmittelsteuereinrichtung;

Fig. 2 einen Querschnitt durch ein zweites Ausführungsbeispiel der Druckmittelsteuereinrichtung.

Ein an einem Ende einer nicht dargestellten Lenkschnecke angeordneter Ventilkörper 1 ist drehbar in einem Lenkgehäuse 2 gelagert. Die Lenkschnecke ist durch einen Torsionsstab 3 verdrehweich mit einer nicht dargestellten Lenkspindel verbunden. Das gabelförmige Ende der Lenkspindel trägt zwei Mitnehmerzapfen 4 und 5, die zum Verstellen zweier Ventilkolben 6 und 7 von zwei quer und außermittig zur Längsachse der Druckmittelsteuereinrichtung angeordneten Steuerventilen 8 und 9 dienen.

Jedes der beiden Steuerventile 8 und 9 weist eine Zulaufringnut 10 bzw. 11 auf, die mit einer Zulaufkammer 12 der Steuereinrichtung in Verbindung steht. Ebenso weist jedes Steuerventil 8 und 9 eine Rücklaufringnut 13 bzw. 14 und je eine Zylinderringnut 15 bzw. 16 auf, die mit einem nicht dargestellten Druckmittelbehälter bzw. mit je einem der beiden Druckräume 17 und 18 eines Servomotors 19 in Verbindung stehen.

Die beiden Ventilkolben 6 und 7 weisen quer zu ihrer Längsrichtung angeordnete Langlöcher 20 und 21 auf, in die die beiden Mitnehmerzapfen 4 und 5 mit Spiel eingreifen. Die Ventilkolben 6 und 7 werden durch zwei Druckfedern 22 und 23, die sich an einem an dem Ventilkörper 1 befestigten Joch 24 abstützen, in Anlage in Berührungslinien 25 und 26 an den Mitnehmerzapfen 4 und 5 gehalten.

Bei bekannten Druckmittelsteuereinrichtungen liegen die Achsen der Mitnehmerzapfen und die Drehachse des gabelförmigen Endes der Lenkspindel in einer Ebene. Bei der erfindungsgemäßen Druckmittelsteuereinrichtung liegen die Berührungslinien 25 und 26 und die Drehachse 27

des gabelförmigen Endes der Lenkspindel wenigstens nahezu in einer Ebene E.

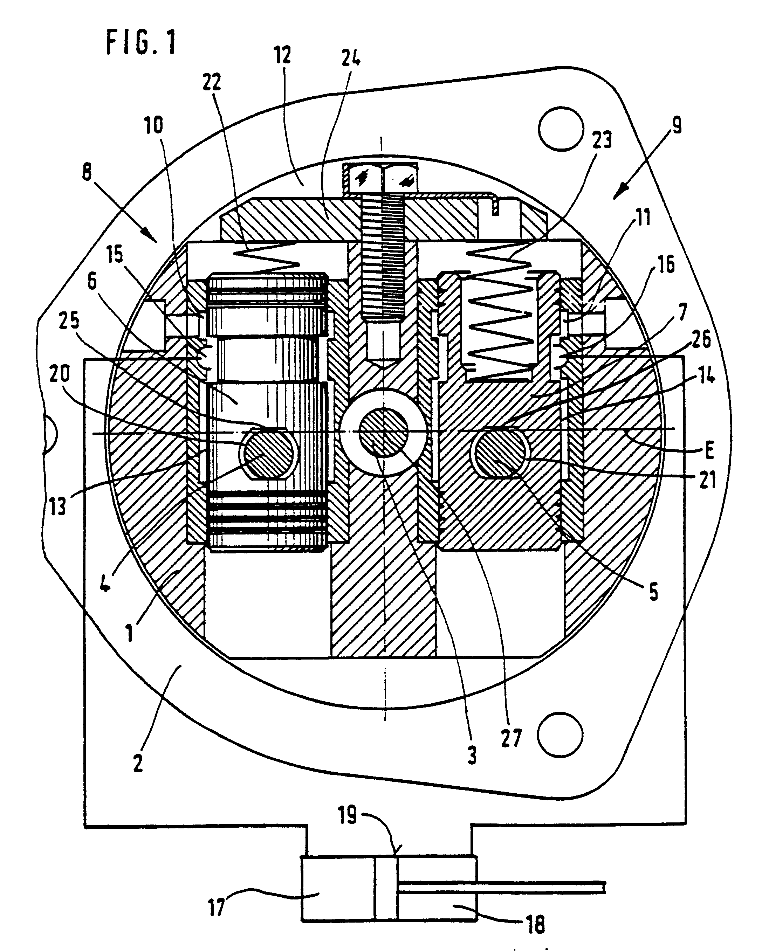

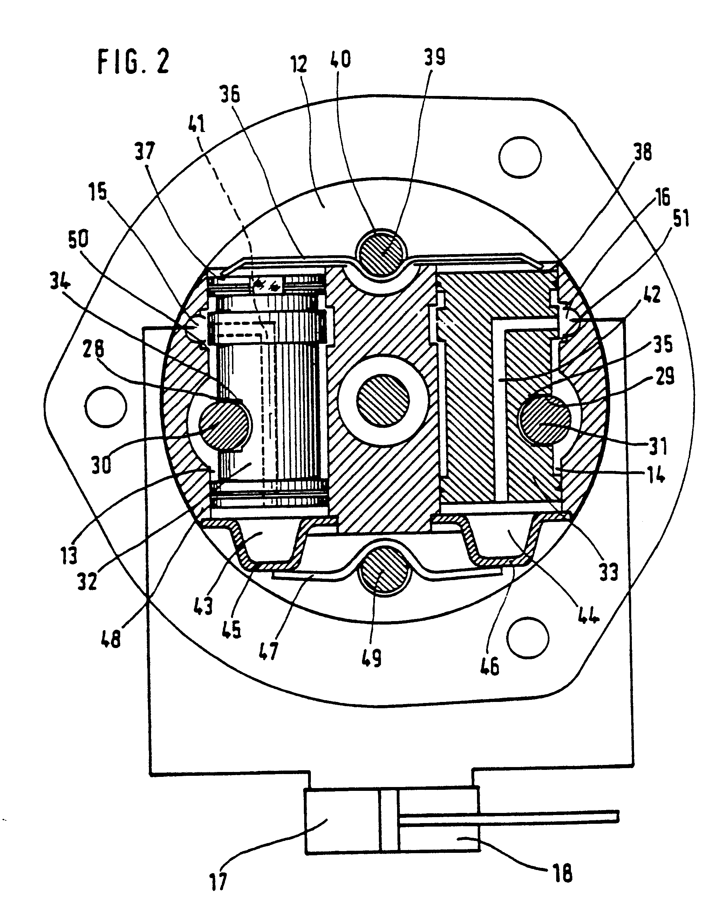

Das Ausführungsbeispiel der Fig. 2 unterscheidet sich von dem Beispiel der Fig. 1 im wesentlichen dadurch, daß der Abstand der Berührungslinien 28 und 29 zwischen den Mitnehmerzapfen 30 und 31 und den Ventilkolben 32 und 33 größer ist als der Abstand der Achsen der Ventilkolben 32 und 33. Dies wird dadurch erreicht, daß die Mitnehmerzapfen 30 und 31 weiter nach außen verlegt sind. Dadurch ergibt Sich die Möglichkeit, daß anstelle eines Langloches eine einfacher zu bearbeitende Quernut 34 bzw. 35 in den Ventilkolben 32 und 33 angeordnet ist.

Um bei der außerhalb der Längsachse der Ventilkolben 32 und 33 liegenden Anordnung der Mitnehmerzapfen 30 und 31 Kippmomente an den Ventilkolben durch den mittigen Angriff der Druckfedern zu verhindern, wird in diesem Beispiel anstelle der beiden Druckfedern 22 und 23 des ersten Ausführungsbeispiels eine Federspange 36 angeordnet. Dabei ersetzt die Federspange 36 gleichzeitig das Joch 24 der ersten Ausführungsform. Die Federspange 36 greift an Berührungslinien 37 und 38 an den Ventilkolben 32 und 33 an, die in Wirkrichtung gegenüber den Berührungslinien 28 und 29 zwischen den Mitnehmerzapfen 30 und 31 und den Ventilkolben 32 und 33 liegen. Die Federspange 36 wird durch einen Bolzen 39 gehalten, der seinerseits durch eine Ausdrehung 40 von der Federspange 36 in axialer Richtung gehalten wird. Der Bolzen 39 kann also in eine einfache Bohrung in dem Ventilkörper gesteckt werden.

Außer der einfacheren Fertigung der Mitnehmernuten 34 und 35 in den Ventilkolben 32 und 33 hat diese Anordnung den Vorteil, daß bei einem gleichen Verdrehwinkel der Mitnehmerzapfen die Ventilkolbenauslenkung größer ist. Dadurch wird bei gleicher Fertigungsgenauigkeit die Lenkpräzision entsprechend vergrößert.

Durch die an der Außenseite der Ventilkolben 32 und 33 angeordneten Mitnehmernuten 34 und 35 wird erreicht, daß in den Ventilkolben 32 und 33 ausreichend Platz für Längskanäle 41 und 42 besteht. Die Längskanäle 41 und 42 stehen in Verbindung mit den Zylinderringnuten 15 bzw. 16 und übertragen den in den entsprechenden Druckräumen 17 bzw. 18 des Servomotors 19 herrschenden Druck in Rückwirkungskammern 43 und 44, die an der Angriffsseite der Federspange 36 entgegengesetzten Stirnseiten der Ventilkolben 32 und 33 angeordnet sind. Die Rückwirkungskammern 43 und 44 werden in axialer Richtung durch Abschlußdeckel 45 und 46 begrenzt, die von einer Spange 47 in fester Anlage an dem Ventilkörper 48 durch einen Bolzen 49 gehalten werden. Der Bolzen 49 ist entsprechend dem Bolzen 39 in dem Ventilkörper 48 gehalten.

Durch diese Anordnung der Rückwirkungskammern 43 und 44 wird erreicht, daß die an den Stirnseiten der Ventilkolben 32 und 33 angreifenden hydraulischen Kräfte gleichgerichtet sind wie die durch die Federspange 36 an den Ventilkolben 32 und 33 angreifenden Federkräfte. Dadurch bleiben auch bei hydraulischer Rückwirkung die Berührungslinien 28 und 29 zwischen den Mitnehmerzapfen 30 bzw. 31 und den Ventilkolben 32 bzw. 33 erhalten. Da nämlich das Druckmittel von außen über die Zulaufkammer 12 zugeführt wird, wirkt der größte Systemdruck auf die gleiche Stirnseite der Ventilkolben 32 und 33 wie die Federspange 36, während die gegenüberliegende Seite der Ventilkolben 33 bzw. 32 je nach Drehrichtung über eine zwischen den Zylinderringnuten 15 bzw. 16 und den Rücklaufringnuten 13 bzw. 14 angeordnete Steueröffnung 50 bzw. 51 zum Druckmittelbehälter entlastet werden.

**Bezugszeichen**

1 Ventilkörper
2 Lenkgehäuse
3 Torsionsstab
4 Mitnehmerzapfen
5 Mitnehmerzapfen
6 Ventilkolben
7 Ventilkolben
8 Steuerventil
9 Steuerventil
10 Zulaufringnut
11 Zulaufringnut
12 Zulaufkammer
13 Rücklaufringnut
14 Rücklaufringnut
15 Zylinderringnut
16 Zylinderringnut
17 Druckraum
18 Druckraum
19 Servomotor
20 Langloch
21 Langloch
22 Druckfeder
23 Druckfeder
24 Joch
25 Berührungslinie
26 Berührungslinie
27 Achse
28 Berührungslinie
29 Berührungslinie
30 Mitnehmerzapfen
31 Mitnehmerzapfen
32 Ventilkolben
33 Ventilkolben
34 Mitnehmernut
35 Mitnehmernut
36 Federspange
37 Berührungslinie
38 Berührungslinie
39 Bolzen
40 Ausdrehung
41 Längskanal

42 Längskanal
43 Rückwirkungskammer
44 Rückwirkungskammer
45 Abschlußdeckel
46 Abschlußdeckel
47 Spange
48 Ventilkörper
49 Bolzen
50 Steueröffnung
51 Steueröffnung

**Patentansprüche**

1. Druckmittelsteuereinrichtung für Hilfskraftlenkungen, insbesondere für Kraftfahrzeuge, mit zwei in einem Ventilkörper (1, 48) angeordneten Steuerventilen (8, 9) die beim Drehen des Lenkhandrades um die Achse des Ventilkörpers rotieren und deren Ventilkolben (6, 7; 32, 33) durch zwei am gabelförmigen Ende einer Lenkspindel angeordnete, in die Ventilkolben eingreifende Mitnehmerzapfen (4, 5; 30, 31) verschiebbar sind, und wobei die Ventilkolben durch die Kraft von Federelementen (22, 23; 36) in einseitiger Anlage an den Mitnehmerzapfen gehalten sind, dadurch gekennzeichnet, daß die Berührungslinien (25, 26; 28, 29) zwischen den Mitnehmerzapfen (4, 5; 30, 31) und den Ventilkolben (6, 7; 32, 33) und die Drehachse (27) des gabelförmigen Endes der Lenkspindel wenigstens nahezu in einer Ebene (E) liegen, die wenigstens nahezu einen rechten Winkel mit den Achsen der Ventilkolben (6, 7; 32, 33) bildet.

2. Druckmittelsteuereinrichtung nach Anspruch 1, dadurch gekennzeichnet, daß die Mitnehmerzapfen (4, 5; 30, 31) in den Ventilkolben (6, 7; 32, 33) mit Spiel eingepaßt sind.

3. Druckmittelsteuereinrichtung nach Anspruch 1 oder 2, dadurch gekennzeichnet, daß der Abstand der Berührungslinien (28, 29) zwischen den Mitnehmerzapfen (30, 31) und den Ventilkolben (32, 33) größer ist als der Abstand der Achsen der Ventilkolben (32, 33).

4. Druckmittelsteuereinrichtung nach Anspruch 3, dadurch gekennzeichnet, daß die Mitnehmerzapfen (30, 31) in quer zur Achse der Ventilkolben (32, 33) in den Ventilkolben (32, 33) angeordnete offene Mitnehmernuten (34, 35) eingreifen.

5. Druckmittelsteuereinrichtung nach Anspruch 3 oder 4, dadurch gekennzeichnet, daß die Wirkungslinie der auf jeden Ventilkolben (32, 33) einwirkenden Federkraft eine zu der Achse des Ventilkolbens (32, 33) parallele, die Berührungslinie (28, 29) zwischen dem Mitnehmerzapfen (30, 31) und dem Ventilkolben (32, 33) schneidende Linie ist.

6. Druckmittelsteuereinrichtung nach einem der Ansprüche 3 bis 5, dadurch gekennzeichnet, daß durch den neben den Mitnehmernuten (34, 35) liegenden Querschnitt jedes Ventilkolbens (32, 33) ein Längskanal (41, 42) verläuft, der eine Verbindung darstellt von je einer Zylinderringnut (15, 16) jedes Steuerventils (8, 9) zu einem an die von dem Federelement (36) abgewandte Stirnseite jedes Ventilkolbens (32, 33) angrenzenden Rückwirkungsraum (43, 44).

**Claims**

1. A pressure medium control unit for servo steering gears, particularly for motor vehicles, having two control valves (8, 9) arranged in a valve body (1, 48), of which the former rotate around the axis of the latter when turning the steering wheel, and valve spools (6, 7; 32, 33) of which are slideable by two driver pins (4, 5; 30, 31) engaging in the valve spools and arranged on the fork shaped end of a steering spindle, and the valve spools being held by the force of spring elements (22, 23; 36) biased unilaterally on the driver pin, characterized in that the contact lines (25, 26; 28, 29) between the driver pins (4, 5; 30, 31) and the valve spools (6, 7; 32, 33) and the rotary axis (27) of the fork shaped end of the steering spindle are arranged so as to at least almost lie in one plane (E), which is at least almost at right angles to the axes of the valve spools (6, 7; 32, 33).

2. A pressure medium control unit according to Claim 1, characterized in that the driver pins (4, 5; 30, 31) are fitted with play within the valve spools (6, 7; 32, 33).

3. A pressure medium control unit according to Claims 1 or 2, characterized in that the distance of the contact lines (28, 29) between the driver pins (30, 31) and the valve spools (32, 33) exceeds the distance of the axes of the valve spools (32, 33).

4. A pressure medium control unit according to Claim 3, characterized in that the driver pins (30, 31) engage in open driver grooves (34, 35) arranged within the valve spools (32, 33) in transverse direction to the axes of the valve spools (32, 33).

5. A pressure medium control unit according to Claims 3 or 4, characterized in that the effective line of the spring force acting on each valve spool (32, 33) is a parallel line to the axis of the valve spool (32, 33), intersecting the contact line (28, 29) between the driver pins (30, 31) and the valve spool (32, 33).

6. A pressure medium control unit according to Claims 3 to 5, characterized in that a longitudinal duct (41, 42) is passing through the cross section of each valve spool (32, 33) arranged adjacent to the driver grooves (34, 35), and this duct forming a connection from one cylinder groove (15, 16) of each control valve (8, 9) to a reaction chamber (43, 44) adjacent to the face end of each valve spool (32, 33) opposite the spring element (36).

**Revendications**

1. Dispositif de commande de fluide sous pression pour directions assistées, notamment pour des véhicules automobiles, comportant deux soupapes de commande (8, 9) qui sont disposées dans un corps de soupape (1, 48), qui pivotent autour de l'axe du corps de soupape lors d'une rotation du volant et dont les pistons de soupapes (6, 7; 32, 33) peuvent coulisser sous l'effet de deux taquets d'entraînement (4, 5; 30, 31) disposés à l'extrémité fourchue d'un arbre de direction et engagés dans les pistons de soupapes, ces pistons étant maintenus en appui unilatéral contre lesdits taquets par la force d'éléments à ressort (22, 23; 36), caractérisé en ce que les lignes de contact (25, 26; 28, 29) entre les taquets d'entraînement (4, 5; 30, 31) et les pistons de soupapes (6, 7; 32, 33), ainsi que l'axe de rotation (27) de l'extrémité fourchue de l'arbre de direction, se trouvent au moins approximativement dans un plan (E) qui forme au moins approximativement un angle droit avec les axes des pistons (6, 7; 32, 33).

2. Dispositif selon la revendication 1, caractérisé en ce que les taquets d'entraînement (4, 5; 30, 31) sont engagés avec du jeu dans les pistons (6, 7; 32, 33).

3. Dispositif selon la revendication 1 ou 2, caractérisé en ce que l'écartement des lignes de contact (28, 29) entre les taquets (30, 31) et les pistons (32, 33) est plus grand que l'écartement des axes des pistons.

4. Dispositif selon la revendication 3, caractérisé en ce que les taquets (30, 31) sont engagés dans des rainures ouvertes (34, 35) ménagées dans les pistons (32, 33) perpendiculairement à l'axe du piston (32, 33).

5. Dispositif selon la revendication 3 ou 4, caractérisé en ce que la ligne d'action de la force de ressort respective appliquée à chaque piston (32, 33) est parallèle à l'axe du piston (32, 33) et coupe la ligne de contact (28, 29) entre le taquet (30, 31) et le piston (32, 33).

6. Dispositif selon l'une des revendications 3 à 5, caractérisé en ce que la section située à côté de ladite rainure (34, 35) dans chaque piston (32, 33) est traversée par un canal longitudinal (41, 42) qui relie une gorge annulaire de cylindre (15, 16) de la soupape respective (8, 9) à une chambre de rétroaction (43, 44) adjacente à la face frontale de chaque piston (32, 33) qui est à l'opposé dudit élément à ressort (36).

FIG. 1

# FIG. 2